# EUROPEAN PATENT APPLICATION

(11) **EP 4 354 995 A1**
(43) Date of publication of application: **17.04.2024**
(21) Application number: 22824209.5
(22) Date of filing: 14.06.2022
(51) Int. Cl.: H04W 72/04

(54) **COMMUNICATION METHOD AND APPARATUS**

(30) Priority: 16.06.2021 CN 202110665581
(71) Applicant: Huawei Technologies Co., Ltd., Shenzhen, Guangdong 518129 (CN)
(72) Inventor: ZHANG, Yunhao, Shenzhen, Guangdong 518129 (CN); WU, Yiqun, Shenzhen, Guangdong 518129 (CN); HAN, Wei, Shenzhen, Guangdong 518129 (CN); CLERCKX, Bruno, London SW7 2AZ (GB); DIZDAR, Onur, London W43DF (GB); MAO, Yijie, Shanghai 201210 (CN)
(74) Representative: Grünecker Patent- und Rechtsanwälte PartG mbB
(86) International application number: PCT/CN2022/098723
(87) International publication number: WO 2022/262730

(57) **Abstract**

This application provides a communication method and apparatus. According to the method, a first terminal apparatus can determine, based on second information, information that is in first demodulation information and second demodulation information and that is used to demodulate a first data stream, and determine information that is used to demodulate a second data stream. The first data stream is a common stream, and the second data stream is a private stream of the first terminal apparatus. The first terminal apparatus may first demodulate, based on the information that is used to demodulate the first data stream, a signal received by the first terminal apparatus on a first resource, to obtain the first data stream, and then may obtain the second data stream based on the first data stream, the information that is used to demodulate the second data stream, and the signal received on the first resource. The method can implement multi-user downlink multiplexing transmission, so as to improve resource utilization.

## Description

### CROSS-REFERENCE TO RELATED APPLICATIONS

This application claims priority to Chinese Patent Application No. 202110665581.0, filed with the China National Intellectual Property Administration on June 16, 2021, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With development of technologies such as the Internet of Things and massive machine-type communications (massive machine-type communications, mMTC), in various application scenarios such as a home, an industry, and a public place, user equipment (user equipment, UE) gradually presents a feature of a large quantity. For example, in an industrial automation scenario, there are a large quantity of user equipments such as monitoring devices (cameras), machines (machines), and sensors (sensors) in a plant. For another example, in a home and life scenario, there are user equipments such as a mobile phone, a wearable device, a smart home appliance, and a vehicle-mounted terminal. In addition, as mobile communication service types increase, same user equipment also has more requirements to receive data of different services by using different data streams.

Because a large quantity of user equipments access a network and a requirement of each user for a quantity of service flows increases, challenges are posed to uplink and downlink transmission capacities of the network, and a quantity of data streams superimposed on one time-frequency resource is required to be increased, so as to improve resource utilization.

### SUMMARY

This application provides a communication method and apparatus, to implement multi-stream signal transmission and improve resource utilization.

According to a first aspect, a communication method is provided. The method includes:

A first terminal apparatus may obtain first information, where the first information includes information about a first resource, first demodulation information, second demodulation information, and second information, a first data stream and a second data stream are carried on the first resource, the first data stream includes data of the first terminal apparatus and data of a second terminal apparatus, and data of the second data stream is the data of the first terminal apparatus; and the second information indicates that one of the first demodulation information and the second demodulation information is used to demodulate the first data stream, and/or the second information indicates that one of the first demodulation information and the second demodulation information is used to demodulate the second data stream; the first terminal apparatus may further demodulate, based on demodulation information that is in the first demodulation information and the second demodulation information and that is used to demodulate the first data stream, a signal received on the first resource, to obtain the first data stream; and the first terminal apparatus may further demodulate, based on the first data stream and demodulation information that is in the first demodulation information and the second demodulation information and that is used to demodulate the second data stream, the signal received on the first resource, to obtain the second data stream.

According to the method, the first terminal apparatus can determine, based on the second information, the information that is in the first demodulation information and the second demodulation information and that is used to demodulate the first data stream and the information that is used to demodulate the second data stream. The first terminal apparatus may first demodulate, based on the information that is used to demodulate the first data stream, the signal received by the first terminal apparatus on the first resource, to obtain the first data stream. Then, the second data stream may be obtained based on the first data stream, the information that is used to demodulate the second data stream, and the signal received on the first resource. The method can implement multi-user downlink multiplexing transmission, so as to improve resource utilization.

In a possible design, the second information may include a first indication field, where the first indication field is associated with the first demodulation information, and when a value of the first indication field is a first value, it indicates that the first demodulation information is used to demodulate the first data stream, or when a value of the first indication field is a second value, it indicates that the first demodulation information is used to demodulate the second data stream; and/or the second information may include a second indication field, where the second indication field is associated with the second demodulation information, and when a value of the second indication field is a third value, it indicates that the second demodulation information is used to demodulate the first data stream, or when a value of the second indication field is a fourth value, it indicates that the second demodulation information is used to demodulate the second data stream.

In a possible design, the first information may further include information about a feedback resource.

In a possible design, the first terminal apparatus may further send, by using the feedback resource, feedback information of the signal received on the first resource. The feedback information includes a third indication field. When a value of the third indication field is a fifth value, it indicates that demodulation of the first data stream fails, or when a value of the third indication field is a sixth value, it indicates that demodulation of the first data stream succeeds and demodulation of the second data stream fails, or when a value of the third indication field is a seventh value, it indicates that demodulation of the first data stream succeeds and demodulation of the second data stream succeeds.

By using this design, the third indication field may be reused to indicate demodulation results of the first data stream and the second data stream, thereby reducing feedback overheads.

In a possible design, the first information is dedicated signaling of the first terminal apparatus.

In a possible design, a pilot of a signal corresponding to the first data stream is different from a pilot of a signal corresponding to the second data stream.

According to a second aspect, a communication method is provided. The method includes:

A first device may send first information to a first terminal apparatus, where the first information includes information about a first resource, first demodulation information, second demodulation information, and second information, a first data stream and a second data stream are carried on a first resource, the first data stream includes data of the first terminal apparatus and data of a second terminal apparatus, and data of the second data stream is the data of the first terminal apparatus; and the second information indicates that one of the first demodulation information and the second demodulation information is used to demodulate the first data stream, and/or the second information indicates that one of the first demodulation information and the second demodulation information is used to demodulate the second data stream; and the first device may further send the first data stream and the second data stream through the first resource.

In a possible design, the second information may include a first indication field, where the first indication field is associated with the first demodulation information, and when a value of the first indication field is a first value, it indicates that the first demodulation information is used to demodulate the first data stream, or when a value of the first indication field is a second value, it indicates that the first demodulation information is used to demodulate the second data stream; and/or the second information includes a second indication field, where the second indication field is associated with the second demodulation information, and when a value of the second indication field is a third value, it indicates that the second demodulation information is used to demodulate the first data stream, or when a value of the second indication field is a fourth value, it indicates that the second demodulation information is used to demodulate the second data stream.

In a possible design, the first information may further include information about a feedback resource.

In a possible design, the first device may further receive, by using the feedback resource, feedback information of a signal received by the first terminal apparatus on the first resource. The feedback information includes a third indication field. When a value of the third indication field is a fifth value, it indicates that demodulation of the first data stream fails, or when a value of the third indication field is a sixth value, it indicates that demodulation of the first data stream succeeds and demodulation of the second data stream fails, or when a value of the third indication field is a seventh value, it indicates that demodulation of the first data stream succeeds and demodulation of the second data stream succeeds.

In a possible design, the first resource further carries a third data stream of the second terminal apparatus. The first device may further send third information to the second terminal apparatus, the third information includes the information about the first resource, third demodulation information, fourth demodulation information, and fourth information. The first data stream and the third data stream are carried on the first resource. Data of the third data stream is the data of the second terminal apparatus. The fourth information indicates that one of the third demodulation information and the fourth demodulation information is used to demodulate the first data stream, and/or the fourth information indicates that one of the third demodulation information and the fourth demodulation information is used to demodulate the third data stream. The first device may further send the second data stream through the first resource.

In a possible design, the third information is dedicated signaling of the second terminal apparatus.

In a possible design, the first information is dedicated signaling of the first terminal apparatus.

In a possible design, a pilot of a signal corresponding to the first data stream is different from a pilot of a signal corresponding to the second data stream.

For beneficial effect shown in the second aspect and any possible design of the second aspect, refer to beneficial effect shown in the first aspect and any possible design of the first aspect. Details are not described herein again.

According to a third aspect, a communication method is provided. The method includes: A first terminal apparatus may receive fifth demodulation information, where the fifth demodulation information is used to demodulate a first data stream, and the first data stream includes data of the first terminal apparatus and data of a second terminal apparatus. The first terminal apparatus may further demodulate, based on the fifth demodulation information, a signal received on the first resource, to obtain the first data stream, where the first resource is used to carry the first data stream and the second data stream, and data of the second data stream is the data of the first terminal apparatus. The first terminal apparatus may further obtain sixth demodulation information. The first terminal apparatus may further demodulate, based on the sixth demodulation information and the first data stream, the signal received on the first resource, to obtain the second data stream.

By using the foregoing method, the first terminal apparatus can separately obtain the fifth demodulation information and the sixth demodulation information, to learn that the fifth demodulation information is used to demodulate the first data stream and the sixth demodulation information is used to demodulate the second data stream. The first terminal apparatus first demodulates, based on the fifth demodulation information, the signal received by the first terminal apparatus on the first resource, to obtain the first data stream. Then, the second data stream may be obtained based on the first data stream, the sixth demodulation information, and the signal received on the first resource. The method can implement multi-user downlink multiplexing transmission, and therefore can improve resource utilization.

In a possible design, the first data stream may further include the sixth demodulation information. Alternatively, the first terminal apparatus may receive sixth demodulation information from a first device.

In a possible design, the first data stream may further include indication information, and the indication information indicates that the first resource is used to carry the second data stream.

In a possible design, the fifth demodulation information may further include information about the first resource; and/or the first terminal apparatus may receive the information about the first resource, and the information about the first resource indicates the first resource.

In a possible design, the fifth demodulation information may further include information about a feedback resource.

In a possible design, the sixth demodulation information may further include the information about the feedback resource.

In a possible design, the first terminal apparatus may receive the information about the feedback resource.

In a possible design, the first terminal apparatus may further send, by using the feedback resource, the feedback information of the signal received on the first resource. The feedback information includes a third indication field. When a value of the third indication field is a fifth value, it indicates that demodulation of the first data stream fails, or when a value of the third indication field is a sixth value, it indicates that demodulation of the first data stream succeeds and demodulation of the second data stream fails, or when a value of the third indication field is a seventh value, it indicates that demodulation of the first data stream succeeds and demodulation of the second data stream succeeds.

In a possible design, the fifth demodulation information is carried in common signaling.

In a possible design, the sixth demodulation information is carried in dedicated signaling of the first terminal apparatus.

In a possible design, a pilot of a signal corresponding to the first data stream is different from a pilot of a signal corresponding to the second data stream.

In a possible design, the first device includes a network device, for example, a base station.

According to a fourth aspect, a communication method is provided. The method includes:

A first device may send fifth demodulation information, where the fifth demodulation information is used to demodulate a first data stream, and the first data stream includes data of a first terminal apparatus and data of a second terminal apparatus; and the first device may further send the first data stream and a second data stream through a first resource, where data of the second data stream is the data of the first terminal apparatus. The first data stream includes sixth demodulation information, or the first device may further send the sixth demodulation information to the first terminal apparatus. The sixth demodulation information is used to demodulate the second data stream, and the data of the second data stream is the data of the first terminal apparatus.

In a possible design, the first data stream further includes indication information, and the indication information indicates that the first resource is used to carry the second data stream.

In a possible design, the fifth demodulation information further includes information about the first resource; and/or the first device may further send the information about the first resource, and the information about the first resource indicates the first resource.

In a possible design, the fifth demodulation information further includes information about a feedback resource.

In a possible design, the sixth demodulation information further includes the information about the feedback resource.

In a possible design, the first device may further send the information about the feedback resource.

In a possible design, the first device may further receive, by using the feedback resource, feedback information of a signal received by the first terminal apparatus on the first resource. The feedback information includes a third indication field. When a value of the third indication field is a fifth value, it indicates that demodulation of the first data stream fails, or when a value of the third indication field is a sixth value, it indicates that demodulation of the first data stream succeeds and demodulation of the second data stream fails, or when a value of the third indication field is a seventh value, it indicates that demodulation of the first data stream succeeds and demodulation of the second data stream succeeds.

In a possible design, the first resource further carries a third data stream of the second terminal apparatus, and the first device may further send the third data stream through the first resource. The first data stream further includes seventh demodulation information, or the first device further sends the seventh demodulation information, and the seventh demodulation information is carried in dedicated signaling of the second terminal apparatus. The seventh demodulation information is used to demodulate the third data stream.

In a possible design, the fifth demodulation information is carried in common signaling.

In a possible design, the sixth demodulation information is carried in dedicated signaling of the first terminal apparatus.

In a possible design, a pilot of a signal corresponding to the first data stream is different from a pilot of a signal corresponding to the second data stream.

In a possible design, the first device includes a network device, for example, a base station.

According to a fifth aspect, a communication apparatus is provided. The apparatus provided in this application has functions of implementing the foregoing method aspect, and includes a corresponding component (means) configured to perform the steps or functions described in the foregoing method aspect. The steps or the functions may be implemented by using software, hardware (for example, a circuit), or a combination of hardware and software.

In a possible implementation, the apparatus may include a processing unit and a transceiver unit. The transceiver unit may be configured to perform communication in the apparatus. The processing unit may be configured to perform functions in the methods shown in the first aspect to the fourth aspect and any possible design thereof.

The apparatus may be implemented by a data receive end, a chip or chipset in the data receive end, a data transmit end, or a chip or chipset in the data transmit end. The data receive end may be a terminal device, and the data transmit end may be a first device, for example, a base station.

According to a sixth aspect, an embodiment of this application provides a communication apparatus. The apparatus includes a communication interface and a processor. The communication interface is configured for communication between the apparatus and another device, for example, data or signal receiving and sending. For example, the communication interface may be a transceiver, a circuit, a bus, a module, or another type of interface, and the another device may be a first device. The processor is configured to invoke a group of programs, instructions, or data, to perform the methods shown in the first aspect to the fourth aspect and any possible design thereof. The apparatus may further include a memory, configured to store the programs, the instructions, or the data that are invoked by the processor. The memory is coupled to the processor, and when executing the instructions, or the data stored in the memory, the processor may implement the method shown in the first aspect to the fourth aspect and any possible design thereof.

According to a seventh aspect, an embodiment of this application further provides a computer-readable storage medium. The computer-readable storage medium stores computer-readable instructions. When the computer-readable instructions are run on a computer, the method shown in the first aspect to the fourth aspect and any possible design thereof is performed.

According to an eighth aspect, an embodiment of this application provides a chip system. The chip system includes a processor, and may further include a memory, and is configured to implement the method shown in the first aspect to the fourth aspect and any possible design thereof. The chip system may include a chip, or may include a chip and another discrete component.

According to a ninth aspect, an embodiment of this application provides a communication system, where the system includes a first device and a terminal device. The terminal device may be configured to perform the method in the first aspect or any possible design of the first aspect, and the first device is configured to perform the method in the second aspect or any possible design of the second aspect.

Alternatively, the terminal device may be configured to perform the method in the third aspect or any possible design of the third aspect, and the first device is configured to perform the method in the fourth aspect or any possible design of the fourth aspect.

According to a tenth aspect, a computer program product including instructions is provided. When the computer program product runs on a computer, the method shown in the first aspect to the fourth aspect and any possible design thereof is performed.

According to an eleventh aspect, an embodiment of this application provides a communication apparatus. The communication apparatus includes a processor, a memory, and a transceiver. The transceiver is configured to receive a signal or send a signal, the memory is configured to store program code or instructions, and the processor is configured to invoke the program code or the instructions from the memory to perform the method shown in the first aspect to the fourth aspect and any possible design thereof.

According to a twelfth aspect, an embodiment of this application provides a communication apparatus. The communication apparatus includes a processor and an interface circuit. The interface circuit is configured to receive computer program code or instructions and transmit the computer program code or the instructions to the processor. The processor runs the computer program code or the instructions to perform the method shown in the first aspect to the fourth aspect and any possible design thereof.

According to a thirteenth aspect, an embodiment of this application provides a communication apparatus. For example, the communication apparatus may be a chip, and the communication apparatus includes a logic circuit and an input/output interface. The input/output interface is used by the apparatus to communicate with a receive end, for example, to send and/or receive a signal. The logic circuit is configured to run computer program code or instructions to perform the method shown in the first aspect to the fourth aspect and any possible design thereof.

For technical effect brought by any implementation of the fifth to thirteenth aspects, refer to beneficial effect in the corresponding method provided above. Details are not described herein again.

### BRIEF DESCRIPTION OF DRAWINGS

FIG. 1 is a schematic diagram of an architecture of a communication system according to an embodiment of this application;
FIG. 2 is a schematic diagram of a principle of rate matching-based multi-user multiplexing transmission according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic diagram of demodulation logic of a communication method according to an embodiment of this application;
FIG. 6 is a schematic diagram of demodulation logic of another communication method according to an embodiment of this application;
FIG. 7 is a schematic diagram of demodulation logic of another communication method according to an embodiment of this application;
FIG. 8 is a schematic diagram of demodulation logic of another communication method according to an embodiment of this application;
FIG. 9 is a schematic diagram of a structure of a downlink transmission apparatus according to an embodiment of this application;
FIG. 10 is a schematic diagram of a structure of another downlink transmission apparatus according to an embodiment of this application; and
FIG. 11 is a schematic diagram of a structure of another downlink transmission apparatus according to an embodiment of this application.

### DESCRIPTION OF EMBODIMENTS

To make objectives, technical solutions, and advantages of this application clearer, the following further describes this application in detail with reference to accompanying drawings.

To make the objectives, the technical solutions, and the advantages of embodiments of this application clearer, the following further describes embodiments of this application in detail with reference to the accompanying drawings.

The following describes some terms in embodiments of this application, to facilitate understanding of a person skilled in the art.

(1) A terminal apparatus is, for example, a terminal device or a module, for example, a chip system, configured to implement a function of the terminal device, where the chip system may be configured in the terminal device. The terminal device includes a device that provides data connectivity for a user. Specifically, the terminal device includes a device that provides data connectivity for a user, or includes a device that provides data connectivity for a user. For example, the terminal device may include a handheld device with a wireless connection function, or a processing device connected to a wireless modem. The terminal device may communicate with a core network through a radio access network (radio access network, RAN), and exchange data with the RAN, or interact with the RAN. The terminal device may include UE, a wireless terminal device, a mobile terminal device, a device-to-device (device-to-device, D2D) communication terminal device, a V2X terminal device, a machine-to-machine/machine-type communication (machine-to-machine/machine-type communication, M2M/MTC) terminal device, and an internet of things (internet of things, IoT) terminal device. Alternatively, the terminal device may be a monitoring device, a machine, a sensor, or the like in an industrial automation scenario, or the terminal device may be a mobile phone, a wearable device, a smart home appliance, a vehicle-mounted terminal, or the like in a home and life scenario.

In this embodiment of this application, the terminal apparatus supports direct communication (PC5) interface communication, in other words, supports transmission through a sidelink.

As an example instead of a limitation, in embodiments of this application, the terminal device may be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted devices. For example, the vehicle-mounted devices are also referred to as onboard units (onboard units, OBUs).

In this embodiment of this application, the terminal device may further include a relay (relay). Alternatively, it may be understood that all devices that can perform data communication with a base station may be considered as terminal devices.

In the following, the method may be described by using an example in which the terminal apparatus is used as one of executors of the communication method, and the terminal apparatus may also be replaced with user equipment, a terminal device, or the like.

(2) A network device includes, for example, an access network (access network, AN) device such as a base station (for example, an access point), and may be a device that communicates with a terminal apparatus on an air interface in an access network by using one or more cells. Alternatively, for example, the network device is a road side unit (road side unit, RSU). The RSU may be a fixed infrastructure entity supporting a V2X application, and may exchange a message with another entity supporting the V2X application. The network device may further include a base station in a code division multiple access (code division multiple access, CDMA) system, a base station in a long term evolution (long term evolution, LTE) system, a next generation NodeB (next generation NodeB, gNB) in a 5th generation (the 5th generation, 5G) mobile communication technology new radio (new radio, NR) system (also referred to as an NR system for short), or may include a central unit (central unit, CU) and a distributed unit (distributed unit, DU) in a cloud radio access network (cloud radio access network, Cloud RAN) system, and the like. This is not limited in this embodiment of this application.

Because embodiments of this application mainly relate to an access network device, the network device described below is an access network device unless otherwise specified. In the following, a first device may be used to represent the network device and/or the access network device. For example, the first device may be a base station.

In embodiments of this application, an apparatus configured to implement a function of the first device may be the first device, or may be an apparatus that can support the first device in implementing the function, for example, a chip system. The apparatus may be installed in the first device. In the technical solutions provided in embodiments of this application, the network device is used as an example to describe a function of the first device in the technical solutions provided in embodiments of this application.

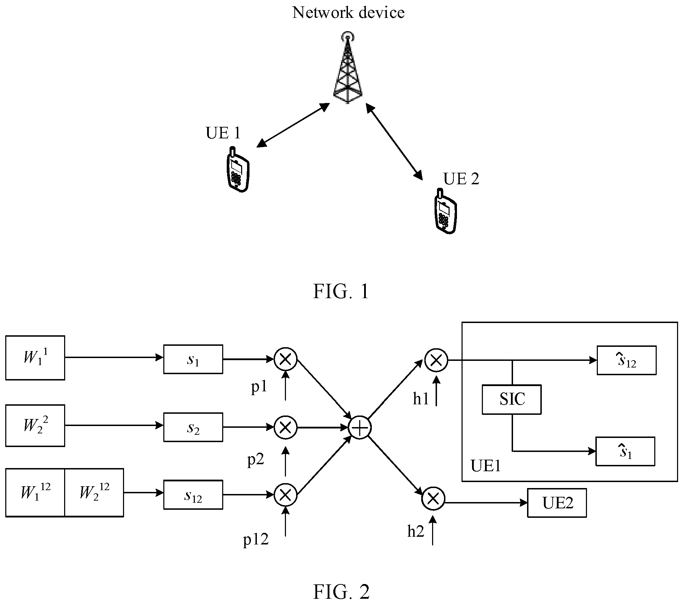

As shown in FIG. 1, the communication method provided in this application may be applied to a downlink transmission scenario of a plurality of UEs. FIG. 1 shows a wireless communication system that includes a network device and a plurality of UEs. The network device may separately perform uplink and downlink transmission with the plurality of UEs. To improve utilization of downlink transmission resources, the network device may reuse a same resource to transmit data of UE 1 and data of UE 2 shown in FIG. 1. Currently, in an LTE and NR standard discussion of the 3rd generation partnership project (3rd generation partnership project, 3GPP), discussion of multi-user multiplexing resources mainly includes the following types: spatial-division multiple access (spatial-division multiple access, SDMA) of orthogonal multiplexing resources and various non-orthogonal multiple access (non-orthogonal multiple access, NOMA) schemes. In the SDMA, a plurality of users reuse a same time-frequency resource, but may be orthogonal in a spatial dimension (antenna dimension). The NOMA is generally considered to be in a resource overloading (overloading) state, to be specific, a quantity of users is greater than a quantity of available orthogonal resources (time domain, frequency domain, code domain, and antenna domain resources). It should be understood that a resource (or referred to as a transmission resource) in this application is a time-frequency resource. In addition, a multi-user multiplexing downlink transmission manner is multi-user multi-stream superposition based on rate splitting (rate splitting, RS).

A principle of rate splitting is as follows:
As shown in FIG. 2, the network device may split the data of the UE 1 into two parts: *W*₁¹ and *W*₁¹², and encode the two parts into data streams s₁ and s₁₂ respectively. In addition, the network device may split the data of the UE 2 into two parts: *W*₂¹ and *W*₂¹², encode the two parts into data streams s₂ and s₁₂ respectively, and send s₁, s₂ and s₁₂ by using a same time-frequency resource. s₁₂ includes the data of the UE 1 and the data of the UE 2, and therefore, both the UE 1 and the UE 2 need to demodulate s₁₂. s₁ carries only the data of the UE 1, and therefore, s₁ needs to be demodulated by only the UE 1. s₂ carries only the data of the UE 2, and therefore, s₂ needs to be demodulated by only the UE 2. In this application, s₁₂ may be referred to as a common data stream (or a common stream for short) of the UE 1 and the UE 2, and s₁ and s₂ may be referred to as a private data stream (or a private stream for short) of the UE 1 and a private data stream of the UE 2 respectively. In implementation, the network device may precode three data streams s₁, s₂, and s₁₂ by using three precoding vectors p1, p2, and p12 respectively, and send, by using a same resource, sequences obtained after precoding, to reuse a same resource to transmit data of a plurality of users.

Herein, the UE 1 is used as an example to describe a process in which UE demodulates data. The UE 1 may first demodulate, based on demodulation information corresponding to s₁₂, a signal received by the UE 1 on the time-frequency resource, to obtain data (ŝ₁₂ as shown in the figure) of the UE 1 in s₁₂. Then, the UE 1 performs, based on the data of the UE 1 in s₁₂, successive interference cancellation (successive interference cancellation, SIC) on the signal received on the time-frequency resource, and then demodulates, based on demodulation information corresponding to s₁, a signal obtained through SIC, to obtain data in the data stream s₁, which is denoted as ŝ₁. In this way, complete data of the UE 1 is obtained. For example, steps of SIC include: The UE 1 first demodulates the data of the UE 1 in ŝ₁₂, then restores the data of the UE 1 in s₁₂ to a signal based on a channel h1 corresponding to s₁₂, and subtracts the recovered signal from the signal received on the time-frequency resource. To be specific, the recovered signal is used as interference to perform interference cancellation from the signal received on the time-frequency resource, to obtain the signal obtained through SIC. An operation of the UE 2 may be performed with reference to an operation of the UE 1.

Based on rate splitting, a network may adjust a data ratio of a private stream to a common stream in rate splitting based on different channel conditions, to obtain performance closer to a channel capacity, improve resource utilization, obtain a sum rate (sum rate) gain in a high signal-to-noise ratio range, and make a system more robust when a channel changes rapidly. For example, when a UE channel condition is good and/or channel estimation is accurate, the network sets a higher proportion of information carried in the private stream; otherwise, the network sets a higher proportion of information carried in the common stream.

An embodiment of this application provides a communication method, to implement rate splitting-based multi-user multiplexing downlink transmission, improve resource utilization, and flexibly allocate an inter-stream capacity by the network device based on channel quality, so as to improve capacity allocation flexibility of a stream and robustness of multi-user multiplexing downlink transmission.

The method may be implemented by the first UE and the network device. The network device may be configured to perform downlink transmission to a plurality of UEs including the first UE. The plurality of UEs include, for example, the first UE and the second UE.

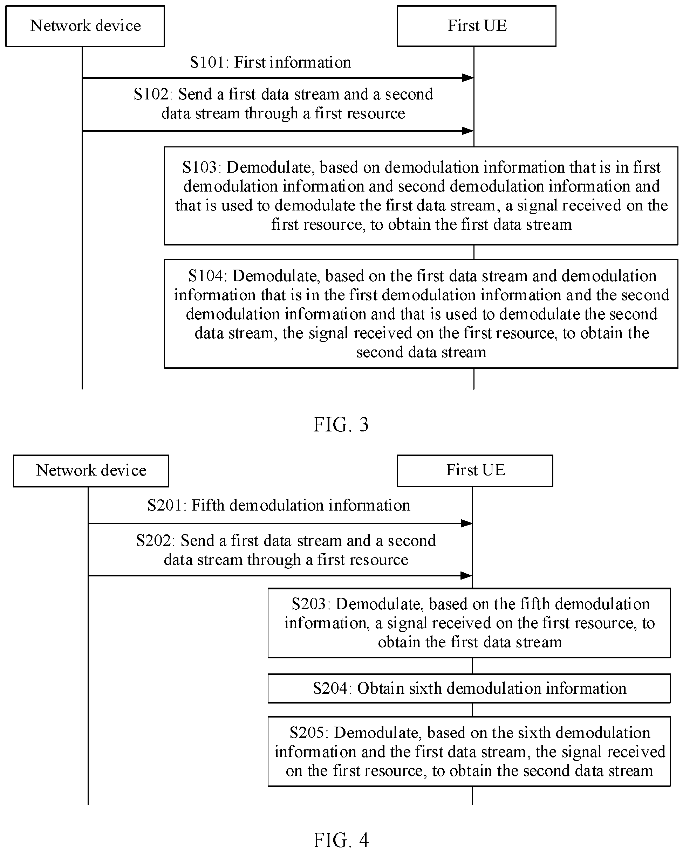

As shown in FIG. 3, a communication method provided in embodiments of this application may include the following steps.

S101: A network device sends first information to a first UE, where the first information includes information about a first resource, first demodulation information, second demodulation information, and second information.

A first data stream and a second data stream are carried on the first resource, the first data stream includes data of the first UE and data of a second UE, and data of the second data stream is the data of the first UE.

Optionally, the first UE may not learn which data stream is the first data stream and which data stream is the second data stream. Therefore, the network device may indicate the data streams by using the first information. Optionally, the first information may further include information that indicates a demodulation order of the first data stream and the second data stream. The first UE needs to demodulate the first data stream before demodulating the second data stream. Therefore, when the information indicates that a data stream needs to be demodulated first, the data stream is the first data stream, and the other data stream is the second data stream. For example, the demodulation order of the data streams is indicated by using 1 bit. When a bit associated with a data stream is "0", it indicates that the data stream is first demodulated, that is, the data stream is the first data stream. When the bit is "1", it indicates that the data stream needs to be demodulated after the other data stream is demodulated, that is, the data stream is the second data stream.

Alternatively, optionally, the first information may further include information that indicates whether a data stream is a common stream or a private stream. For example, whether the data stream is the common stream or the private stream is indicated by using 1 bit. When a bit associated with a data stream is "0", it indicates that the data stream is a common stream, that is, the data stream is the first data stream. When the bit is "1", it indicates that the data stream is a private stream, that is, the data stream is the second data stream.

One of the first demodulation information and the second demodulation information may be used by the first UE to demodulate the first data stream, and the other may be used by the first UE to demodulate the second data stream. The first demodulation information herein may include information that is used to demodulate one of the first data stream and the second data stream. For example, the first demodulation information may indicate information, for example, a pilot, an antenna port, a modulation and coding scheme (modulation and coding scheme, MCS), a hybrid automatic repeat request (hybrid automatic repeat request, HARQ) process number, or a redundancy version (redundancy version, RV) of the data stream. The MCS includes information such as a QAM modulation order and/or a code rate. Similarly, the second demodulation information may include information that is used to demodulate the other data stream in the first data stream and the second data stream.

The second information may indicate that one of the first demodulation information and the second demodulation information is used to demodulate the first data stream, and/or indicate that one of the first demodulation information and the second demodulation information is used to demodulate the second data stream.

In a possible implementation, the second information may indicate a use order of the first demodulation information and the second demodulation information. The first UE needs to demodulate the first data stream before demodulating the second data stream. Therefore, the second information may indicate demodulation information that is in the first demodulation information and the second demodulation information and that is first used, and the demodulation information is demodulation information that is used to demodulate the first data stream. Alternatively, the second information may indicate demodulation information that is in the first demodulation information and the second demodulation information and that is used later, and the demodulation information is demodulation information that is used to demodulate the second data stream.

For example, an indication field (for example, 1 bit) associated with the demodulation information indicates a use order of the first demodulation information. When a first indication field associated with the first demodulation information is a first value (for example, "0"), it indicates that the demodulation information is first used to perform demodulation, that is, the first demodulation information is used to demodulate the first data stream. When the bit is a second value (for example, "1"), it indicates that the first demodulation information is used to perform demodulation after the other data stream is demodulated by using the other demodulation information, that is, the first demodulation information is used to demodulate the second data stream. Similarly, when a second indication field associated with the second demodulation information is a third value (for example, "0"), it indicates that the demodulation information is first used to perform demodulation, that is, the second demodulation information is used to demodulate the first data stream. When the bit is a fourth value (for example, " 1"), it indicates that the second demodulation information is used after the other data stream is demodulated by using the other demodulation information, that is, the second demodulation information is used to demodulate the second data stream. The indication field associated with the demodulation information may be carried in a same domain or field as the demodulation information, or the indication field associated with the demodulation information may be one or more bits in the demodulation information.

For another example, the use order of the first demodulation information and the use order of the second demodulation information may be indicated by one same indication field. When the field is 1, the first demodulation information is first used to demodulate the first data stream, and otherwise, the second demodulation information is first used to demodulate the second data stream.

In another implementation, the second information may alternatively indicate a correspondence between the first demodulation information and the second demodulation information and one of the first data stream and the second data stream. For example, if the second information indicates that the first demodulation information corresponds to the first data stream, the first demodulation information is used to demodulate the first data stream, and the second demodulation information is used to demodulate the second data stream. For example, 1 bit indicates whether the demodulation information is used to demodulate the first data stream or the second data stream. When a bit associated with the demodulation information is "0", it indicates that the demodulation information is used to demodulate the first data stream, and when the bit is " 1", it indicates that the demodulation information is used to demodulate the second data stream.

It should be understood that the information about the first resource herein may be understood as resource indication information of the first resource, including time domain and/or frequency domain indication information of the first resource.

Optionally, the first information is carried in dedicated signaling of the first UE, for example, dedicated DCI of the first UE. It should be understood that, in this application, dedicated signaling of UE may include signaling scrambled by using a UE-specific (UE-specific) radio network temporary identity (radio network temporary identity, RNTI) of the UE, for example, DCI. Common signaling may include a multicast message, broadcast information, system information, and the like.

S102: The network device sends the first data stream and the second data stream through the first resource.

For example, the network device may send the first data stream and the second data stream in a manner shown in FIG. 2. For example, the first data stream is s₁₂ shown in FIG. 2, and the second data stream is s₁ shown in FIG. 2.

S103: The first UE demodulates, based on demodulation information that is in the first demodulation information and the second demodulation information and that is used to demodulate the first data stream, a signal received on the first resource, to obtain the first data stream.

The signal received on the first resource is a signal received by the first UE on the first resource.

Optionally, a process in which the first UE demodulates the first data stream is as follows: The first UE estimates a channel of the first data stream based on a pilot indicated by the demodulation information that is used to demodulate the first data stream, and then demodulates, based on parameters such as the MCS, the RV, and the HARQ process number, the signal received by the first UE on the first resource, to obtain the first data stream.

S104: The first UE demodulates, based on the first data stream and demodulation information that is in the first demodulation information and the second demodulation information and that is used to demodulate the second data stream, the signal received on the first resource, to obtain the second data stream.

Optionally, a process in which the first UE demodulates the second data stream is as follows: The first UE performs, based on the first data stream obtained in S103, SIC processing on the signal received on the first resource. A channel of the second data stream is estimated based on the pilot indicated by the demodulation information that is used to demodulate the first data stream, and a signal obtained through SIC processing has been demodulated based on the channel of the second data stream and the demodulation information that is used to demodulate the first data stream, to obtain the second data stream.

A process of the SIC processing may include the following steps: The first UE performs signal recovery based on the first data stream obtained in S103, for example, encodes and modulates the first data stream based on the MCS and the RV, and recovers encoded and modulated data into a signal based on the channel of the first data stream estimated in S103; and a signal recovered in the previous step is subtracted from the signal received on the first resource, to obtain the signal obtained through the SIC processing.

According to the method shown in FIG. 3, the first UE can learn, based on the second information, the information that is used to demodulate the first data stream and that is in the first demodulation information and the second demodulation information, and the information that is used to demodulate the second data stream. The first UE may first demodulate, based on the information that is used to demodulate the first data stream, the signal received by the first UE on the first resource, to obtain the first data stream, and then may obtain the second data stream based on the first data stream, the information that is used to demodulate the second data stream, and the signal received on the first resource. The method can implement multi-user downlink multiplexing transmission, so as to improve resource utilization.

Similarly, the first resource may be further reused to transmit a data stream of the second UE. The data stream is, for example, referred to as a third data stream. The network device may further send scheduling information (which may be referred to as third information in this application) similar to the first information to the second UE. The scheduling information is configured to schedule the second UE to receive and demodulate the first data stream and the third data stream. The second UE may demodulate the first data stream and the third data stream in a manner similar to that of the first UE.

For example, the network device may send the third information to the second UE. The third information may include the information about the first resource, third demodulation information, fourth demodulation information, and fourth information.

The information about the first resource herein may be the resource indication information of the first resource. The third information is the same as or different from the information about the first resource in the first information. This is not specifically limited in this application.

One of the third demodulation information and the fourth demodulation information may be used by the second UE to demodulate the first data stream, and the other may be used by the second UE to demodulate the third data stream.

For example, the third demodulation information herein may include information that is used to demodulate one of the first data stream and the third data stream. For example, the third demodulation information may indicate information such as a pilot, an antenna port, an MCS, a HARQ process number, or an RV of the data stream. Similarly, the fourth demodulation information may include information that is used to demodulate the other data stream in the first data stream and the third data stream.

The fourth information may indicate that one of the third demodulation information and the fourth demodulation information is used to demodulate the first data stream, and/or indicate that one of the third demodulation information and the fourth demodulation information is used to demodulate the third data stream. Optionally, the fourth information indicates a use order of the third demodulation information and the fourth demodulation information, or indicates a correspondence between the third demodulation information and the fourth demodulation information and one of the first data stream and the third data stream respectively. For a specific implementation, refer to the description of the foregoing second information. Details are not described herein again.

Optionally, the third information may be carried in dedicated signaling of the second UE.

In S101, the first information may further include information about a feedback resource, which is used by the first UE to send feedback information of the signal received by the first UE on the first resource. The information about the feedback resource includes a time-frequency resource and/or power control information of a physical uplink control channel (physical uplink control channel, PUCCH). The feedback information may indicate a demodulation result of the first UE for the first data stream and/or the second data stream. In other words, the resource may be used to carry feedback information of the first UE for the first data stream and/or the second data stream.

The feedback information may indicate an ACK/NACK state of the first data stream and/or the second data stream, where ACK indicates that demodulation succeeds, and NACK indicates that demodulation fails. For example, the first data stream is used as an example. When demodulation of the first data stream fails, the feedback information may indicate that the first data stream is in the NACK state, in other words, demodulation of the first data stream fails. When demodulation of the first data stream succeeds, the feedback information may indicate that the first data stream is in the ACK state, in other words, demodulation of the first data stream succeeds.

For example, the feedback information may include a third indication field, and a correspondence between a value of the third indication field and HARQ information is shown in Table 1. It can be learned that when a value of the third indication field is a fifth value, it indicates that demodulation of the first data stream fails, and in this case, demodulation of the second data stream fails. When a value of the third indication field is a sixth value, it indicates that demodulation of the first data stream succeeds and demodulation of the second data stream succeeds. When a value of the third indication field is a seventh value, it indicates that demodulation of the first data stream succeeds and demodulation of the second data stream fails.

**Table 1**

| Value of the third indication field | Fifth value, for example, {0, 0} | Sixth value, for example, {0, 1} | Seventh value, for example, {1, 1} |
|---|---|---|---|
| ACK/NACK state | First data stream is in the NACK state | First data stream is in the ACK state, and the second data stream is in the ACK state | First data stream is in the ACK state, and the second data stream is in the NACK state |

Optionally, the network device may further send a fourth data stream through the first resource, and the fourth data stream is the data of the first UE. Data in the fourth data stream and data in the second data stream may belong to different services. For a sending and receiving process of the fourth data stream, refer to sending and receiving of the second data stream. In this case, the first UE may further send feedback information of the fourth data stream to the network device by using the feedback resource.

It should be understood that, when there are a plurality of private streams of the first UE on the first resource, a demodulation sequence in which the first UE demodulates the plurality of private streams may be set. Optionally, the first UE may obtain the plurality of private streams through SIC processing. An example in which the first UE demodulates the second data stream and the fourth data stream is used for description herein. After demodulating the second data stream, the first UE may perform, based on the second data stream, SIC processing on the signal received on the first resource, and demodulate, based on demodulation information corresponding to the fourth data stream, the signal obtained through SIC processing, to obtain the fourth data stream. Therefore, if demodulation of a previous demodulated private stream fails, demodulation of a later demodulated private stream fails. A demodulation order of the second data stream and the fourth data stream may be indicated by using the indication information. For an indication manner, refer to a manner of indicating the demodulation order of the first data stream and the second data stream in this application.

In implementation, the third indication field may be reused to indicate demodulation results of the first UE for the first data stream, the second data stream, and the fourth data stream. Table 2 is described by using an example in which demodulation of the second data stream is prior to demodulation of the fourth data stream.

**Table 2**

| Value of the third indication field | Fifth value, for example, {0, 0} | Sixth value, for example, {0, 1} | Seventh value, for example, {1, 1} | Eighth value, for example, {1, 0} |
|---|---|---|---|---|
| ACK/NACK state | First data stream is in the NACK state | First data stream is in the ACK state, and the second data stream is in the NACK state | First data stream is in the ACK state, the second data stream is in the ACK state, and the fourth data stream is in the NACK state | First data stream is in the ACK state, the second data stream is in the ACK state, and the fourth data stream is in the ACK state |

As shown in Table 2, when the value of the third indication field sent by the first UE to the network device is the fifth value, the network device may learn that the first data stream, the second data stream, and the fourth data stream of the first UE are all in the NACK state. When the value of the third indication field is the sixth value, the network device may learn that the first data stream of the first UE is in the ACK state, but both the second data stream and the fourth data stream are in the NACK state. When the value of the third indication field is the seventh value, the network device may learn that the first data stream of the first UE is in the ACK state, but both the second data stream and the fourth data stream are in the NACK state. When the value of the third indication field is the eighth value, the network device may learn that the first data stream, the second data stream, and the fourth data stream of the first UE are in the ACK state.

As shown in Table 3, the feedback information may also be represented by using a sequence cyclic shift (sequence cyclic shift) of a PUCCH of the first UE. The sequence cyclic shift may occupy a length of 2 bits, and different values are used to indicate HARQ states of the first data stream, the second data stream, and the fourth data stream of the first UE.

It can be learned that when the sequence cyclic shift of the PUCCH sent by the first UE to the network device is the fifth value, it indicates the first data stream is in the NACK state. When the sequence cyclic shift of the PUCCH sent by the first UE to the network device is the sixth value, it indicates that demodulation of the first data stream and the second data stream succeeds and demodulation of the fourth data stream fails. When the third indication field is the seventh value, it indicates that demodulation of the first data stream and the fourth data stream succeeds, and demodulation of the second data stream fails. When the third indication field is the eighth value, it indicates that demodulation of the first data stream succeeds, and demodulation of the second data stream and the fourth data stream fails.

**Table 3**

| Sequence cyclic shift of the PUCCH | Fifth value, for example, {0, 0} | Sixth value, for example, {0, 1} | Seventh value, for example, {1, 1} | Eighth value, for example, {1, 0} |
|---|---|---|---|---|
| ACK/NACK state | First data stream is in the NACK state | First data stream is in the ACK state, and second data stream is in the NACK state | First data stream is in the ACK state, the second data stream is in the ACK state, and the fourth data stream is in the NACK state | First data stream is in the ACK state, the second data stream is in the ACK state, and the fourth data stream is in the ACK state |

In addition, in this application, one bit may alternatively be used to indicate a HARQ state of a data stream. For example, when each bit is set to "0", it indicates that a data stream corresponding to the bit is in the ACK state, and when each bit is set to "1", it indicates the data stream corresponding to the bit is in the NACK state.

As shown in FIG. 4, another communication method according to an embodiment of this application includes the following steps.

S201: A network device sends fifth demodulation information, where the fifth demodulation information is used to demodulate a first data stream, and the first data stream includes data of a first UE and data of a second UE.

The fifth demodulation information in S201 may be carried in common signaling, and the common signaling is used to configure a common stream in a dynamic or semi-static manner. The semi-static configuration information may be included in common DCI or common radio resource control (radio resource control, RRC) signaling, or may be included in dedicated signaling of UE. The dynamic configuration information may include the common DCI. If the common stream is configured in a semi-static configuration manner, the common signaling may be used to configure the time-frequency resource of the common stream in a semi-static manner, or the network device may configure the time-frequency resource of the common stream in a semi-static manner by using other signaling.

The fifth demodulation information may include information such as a pilot, an antenna port, an MCS, a HARQ process number, or an RV of the first data stream.

Correspondingly, a first terminal apparatus receives the fifth demodulation information.

S202: The network device sends the first data stream and a second data stream through a first resource, where data of the second data stream is the data of the first UE.

For example, the network device may send the first data stream and the second data stream in a manner shown in FIG. 2. For example, the first data stream is s₁₂ shown in FIG. 2, and the second data stream is s₁ shown in FIG. 2.

S203: The first UE demodulates, based on the fifth demodulation information, a signal received on the first resource, to obtain the first data stream.

For performance of S203, refer to S103. A difference lies in that the first demodulation information in S103 is replaced with the fifth demodulation information herein.

S204: The first UE obtains sixth demodulation information, where the sixth demodulation information is used to demodulate the second data stream.

The sixth demodulation information may include information such as a pilot, an antenna port, an MCS, a HARQ process number, or an RV of the second data stream.

Optionally, if the time-frequency resource of the common stream is configured in the semi-static configuration manner, the sixth demodulation information may be used to determine the first resource from the semi-statically configured time-frequency resource, so that the first UE demodulates the second data stream on the first resource. For example, if the sixth demodulation information or signaling in which the sixth demodulation information is located may include demodulation information of a common stream, the common stream is the first data stream, and a corresponding time-frequency resource is the first resource. Alternatively, to reduce signaling overheads, the sixth demodulation information may indicate only that a specific time-frequency resource is the first resource, or indicate which time-frequency resource carries the second data stream, and does not need to carry complete demodulation information. For example, the sixth demodulation information or the signaling in which the sixth demodulation information is located may indicate a time location (for example, a subframe number or a timeslot number), a sequence number (sequence number of a semi-static resource) of the first resource, or the like.

For another example, the network device may alternatively semi-statically configure a private stream for a time-frequency resource carrying a common stream. For example, a bitmap is indicated by using the sixth demodulation information or other information that is semi-statically sent, and the bitmap may be used to determine that the time-frequency resource carrying the common stream carries the private stream. For example, each location in the bitmap may correspond to one semi-statically configured time-frequency resource block, and the first UE may determine, based on a bit value of a specific location in the bitmap being 1 or 0, whether to demodulate a private stream on the time-frequency resource.

In a possible implementation, the sixth demodulation information may be carried in dedicated signaling sent by the network device to the first UE. In this case, the dedicated signaling may further include information about the first resource.

In another possible example, the sixth demodulation information may be carried in the first data stream, and the first UE reads the sixth demodulation information from the first data stream after obtaining the first data stream. In this case, the first UE may learn that there is the second data stream on a resource (namely, the first resource) used to carry the first data stream. That is, the first resource is a resource used to carry the first data stream.

In still another possible example, the sixth demodulation information may be carried in the dedicated signaling sent by the network device to the first UE. In this case, the dedicated signaling may be used to semi-statically configure a transmission resource of the second data stream. The first UE further needs to identify, with reference to indication information in the first data stream, whether the resource used to carry the first data stream further carries the second data stream. The indication information may be used to identify that the resource used to carry the first data stream is further used to carry the second data stream. The first UE may use, based on the indication information, a resource carrying the indication information as the first resource, and subsequently demodulate, based on the sixth demodulation information, the second data stream carried by the resource. The indication information may further indicate a quantity of private streams of the first UE on the first resource. The indication information may specifically indicate the first UE to demodulate the second data stream, or indicate the first UE to demodulate the private streams of the first UE on the first resource.

It should be understood that a performance sequence of S204 is not strictly limited in this application. S204 may be performed after S203, or may be performed before S203, for example, before S202.

S205: The first UE demodulates, based on the sixth demodulation information and the first data stream, the signal received on the first resource, to obtain the second data stream.

For performance of S205, refer to S104. A difference lies in that the second demodulation information in S104 is replaced with the sixth demodulation information herein.

According to the method shown in FIG. 4, the first UE can separately obtain the fifth demodulation information and the sixth demodulation information, to learn that the fifth demodulation information is used to demodulate the first data stream and the sixth demodulation information is used to demodulate the second data stream. The first UE first demodulates, based on the fifth demodulation information, the signal received by the first UE on the first resource, to obtain the first data stream. Then, the second data stream may be obtained based on the first data stream, the sixth demodulation information, and the signal received on the first resource. The method can implement multi-user downlink multiplexing transmission, and therefore can improve resource utilization.

Similarly, the first resource may be further reused to transmit a data stream of the second UE. For example, the data stream is referred to as a third data stream. Similar to a manner in which the first UE obtains the sixth demodulation information, the second UE may receive dedicated signaling from the network device or obtain, from the first data stream, demodulation information (which may be referred to as seventh demodulation information) used to demodulate the third data stream, to implement multi-user multiplexing.

In S201, the network device may further send information about a feedback resource, so that the first UE sends, on the resource, feedback information of the signal received by the first UE on the first resource. The information about the feedback resource may be carried in the fifth demodulation information and/or the sixth demodulation information.

For example, if the fifth demodulation information is carried in semi-static configuration information of the first data stream, the semi-static configuration information may further include the information about the first resource and/or the information about the feedback resource.

It should be understood that the first UE may further send the feedback information to the network device by using the feedback resource. An implementation of the feedback information may be the foregoing feedback information sending manner in the method shown in FIG. 3, for example, any implementation in Table 1 to Table 3 is used. For brevity, details are not described herein.

The following describes, by using specific embodiments, a method for a first UE to demodulate a first data stream and a second data stream.

### Embodiment 1

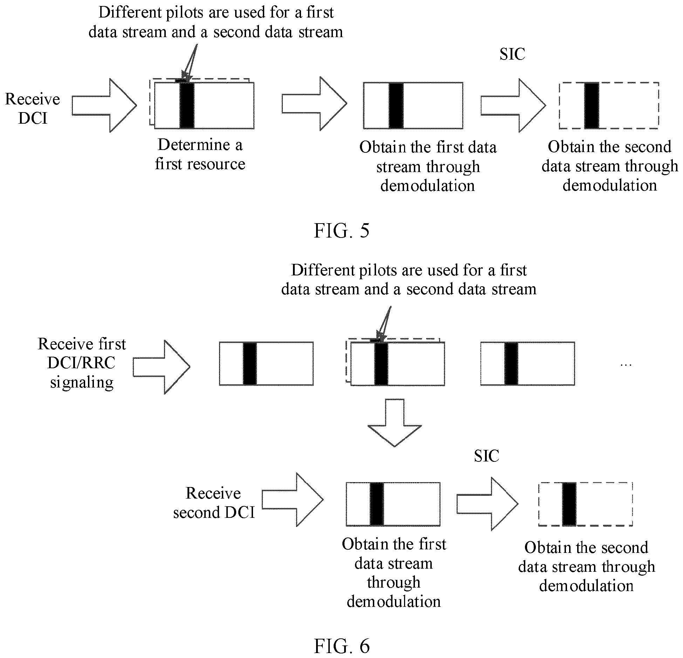

As shown in FIG. 5, a network device may indicate first demodulation information and second demodulation information by using DCI. The DCI may be common DCI or dedicated DCI of first UE. The DCI may further carry information about a first resource and second information. The network device may transmit, on the first resource, a first data stream that includes data of the first UE and a second data stream of the first UE. A pilot of the first data stream is different from a pilot of the second data stream. After obtaining the DCI, the first UE determines, based on the information about the first resource, a time-frequency resource scheduled by using the DCI, that is, the first resource, and receives a signal on the first resource. The first UE may further determine, based on the second information, demodulation information that is in the first demodulation information and the second demodulation information and that is used to demodulate the first data stream, and determine demodulation information that is used to demodulate the second data stream. Then, the first UE estimates a channel of the first data stream based on the pilot of the first data stream, and obtains the first data stream through demodulation based on the demodulation information that is used to demodulate the first data stream. In addition, the first UE estimates a channel of the second data stream on the first resource based on the pilot of the second data stream, and then demodulates, based on the first data stream and the demodulation information used to demodulate the second data stream, the signal received on the first resource, to obtain the second data stream.

### Embodiment 2

A network device may schedule, by using RRC signaling, a channel used to transmit a common stream in a semi-static configuration manner. Alternatively, the network device may dynamically schedule, by using first DCI, the channel used to transmit the common stream. Alternatively, the network device semi-statically configures, by using the RRC signaling, the channel used to transmit the common stream, and the first DCI is used to trigger a terminal device to receive the semi-statically configured channel. As shown in FIG. 6, a semi-static scheduling manner is used as an example for description. Fifth demodulation information that is used to demodulate the common stream may be carried in the first DCI that is received on the semi-statically configured channel used to transmit the common stream and that is used to trigger the terminal device to receive the semi-statically configured channel, or in the RRC signaling that is received on the semi-statically configured channel used to transmit the common stream. In Embodiment 2, the network device may further send second DCI to the first UE. The second DCI carries sixth demodulation information, and the second DCI may further indicate a time-frequency resource of a second data stream, that is, a first resource.

If the channel used to transmit the common stream is configured in a semi-static manner, the first UE may receive indication information of a plurality of time-frequency resources, and each of the time-frequency resources may carry the common stream. In this case, the second DCI may be used to determine that a time-frequency resource carrying the common stream is further used to carry the second data stream, or may indicate the first resource in the plurality of time-frequency resources carrying the common stream. Optionally, the second DCI does not need to carry demodulation information of a specific common stream, and only needs to indicate which time-frequency resource carries the second data stream. For example, the second DCI may indicate a time location (for example, a subframe number or a timeslot number), and a sequence number (sequence number of a semi-static resource block) of the first resource. In this way, DCI overheads can be reduced.

After receiving the RRC signaling or the first DCI, the UE determines, based on the RRC signaling or the first DCI, a resource on which the common stream is located. After receiving the second DCI, the first UE determines the resource on which the second data stream is located. If the resource overlaps the resource on which the common stream is located, the resource is the first resource, and the common stream is a first data stream. Then, the first UE estimates a channel of the first data stream based on a pilot of the first data stream, and demodulates, based on the fifth demodulation information corresponding to the first data stream, a signal received by the first UE on the first resource, to obtain the first data stream. In addition, the first UE estimates a channel of the second data stream on the first resource based on a pilot of the second data stream, and then demodulates, based on the sixth demodulation information and the first data stream, the signal received on the first resource, to obtain the second data stream.

### Embodiment 3

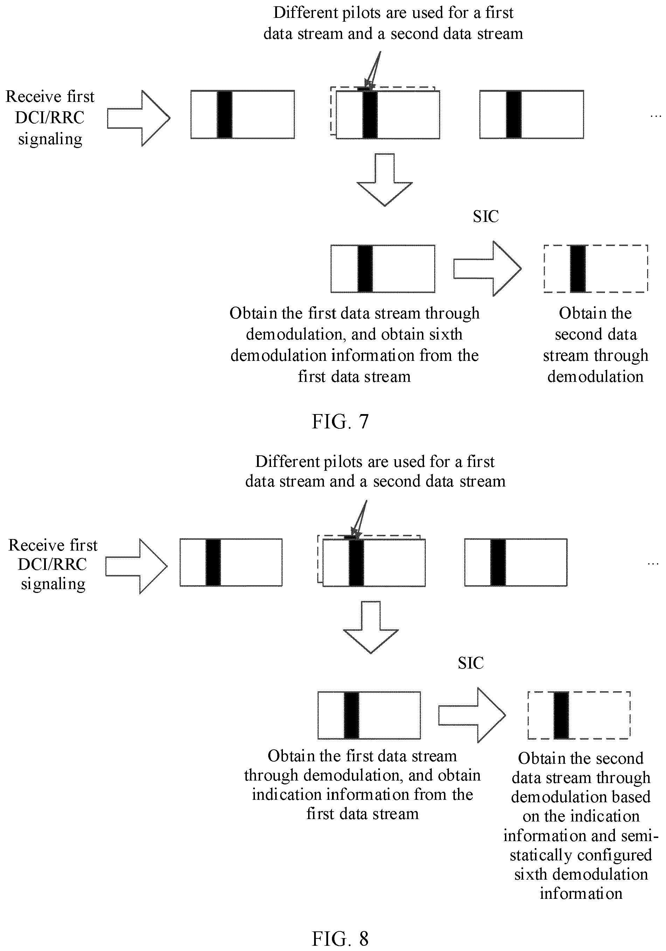

A network device may schedule, by using RRC signaling, a channel used to transmit a common stream in a semi-static configuration manner. Alternatively, the network device may dynamically schedule, by using first DCI, the channel used to transmit the common stream. Alternatively, the network device semi-statically configures, by using the RRC signaling, the channel used to transmit the common stream, and the first DCI is used to trigger a terminal device to receive the semi-statically configured channel. In FIG. 7, a semi-static scheduling manner is used as an example for description. Fifth demodulation information that is used to demodulate the common stream may be carried in the first DCI that is received on the semi-statically configured channel used to transmit the common stream and that is used to trigger the terminal device to receive the semi-statically configured channel, or in the RRC signaling that is received on the semi-statically configured channel used to transmit the common stream. In Embodiment 3, the network device may further carry sixth demodulation information in a common stream. The common stream is a first data stream, and a resource carrying the common stream is reused to transmit a second data stream. The sixth demodulation information may be used to demodulate the second data stream.

After receiving the RRC signaling or the first DCI, the UE determines, based on the RRC signaling or the first DCI, the resource on which the common stream is located, estimates a pilot of the common stream based on the fifth demodulation information, and demodulates the common stream. If the first UE obtains sixth demodulation information in a common stream after demodulating the common stream, the common stream is the first data stream, and a resource on which the common stream is located is a first resource. The first UE may further estimate a channel of the second data stream on the first resource based on a pilot of the second data stream, and then demodulate, based on the sixth demodulation information and the first data stream, a signal received on the first resource, to obtain the second data stream.

### Embodiment 4

A network device may schedule, by using RRC signaling, a channel used to transmit a common stream in a semi-static configuration manner. Alternatively, the network device may dynamically schedule, by using first DCI, the channel used to transmit the common stream. Alternatively, the network device semi-statically configures, by using the RRC signaling, the channel used to transmit the common stream, and the first DCI is used to trigger a terminal device to receive the semi-statically configured channel. In FIG. 8, a semi-static scheduling manner is used as an example for description. Fifth demodulation information that is used to demodulate the common stream may be carried in the first DCI that is received on the semi-statically configured channel used to transmit the common stream and that is used to trigger the terminal device to receive the semi-statically configured channel, or in the RRC signaling that is received on the semi-statically configured channel used to transmit the common stream. In Embodiment 4, the network device may further schedule, in the semi-static configuration manner, a channel used to transmit sixth demodulation information. The sixth demodulation information is used to demodulate a second data stream, and the second data stream is a private stream of the first UE.

The network device may further send a first data stream and the second data stream on a first resource. The first data stream carries indication information indicating that a resource carrying the first data stream is further used to carry the second data stream. Indication information transmitted on a time-frequency resource block may include information used by UE (including but not limited to the first UE) to determine whether the private stream needs to be demodulated. For example, the indication information transmitted on the resource block may include a bitmap. Each location in the bitmap corresponds to one UE, and the first UE determines whether a bit value of a location corresponding to the first UE in the bitmap is 1 or 0, to determine whether to demodulate the private stream on the time-frequency resource.

After receiving the RRC signaling or the first DCI, the UE determines, based on the RRC signaling or the first DCI, a resource on which the common stream is located, estimates a pilot of the common stream based on the fifth demodulation information, and demodulates the common stream. If the first UE demodulates a common stream transmitted on a time-frequency resource block, the first UE determines, based on indication information in the common stream, that the private stream of the first UE transmitted on the time-frequency resource needs to be demodulated. The common stream is the first data stream, and the time-frequency resource is the first resource. The first UE may further estimate a channel of the second data stream on the first resource based on a pilot of the second data stream, and then demodulate, based on the sixth demodulation information and the first data stream, a signal received on the first resource, to obtain the second data stream.

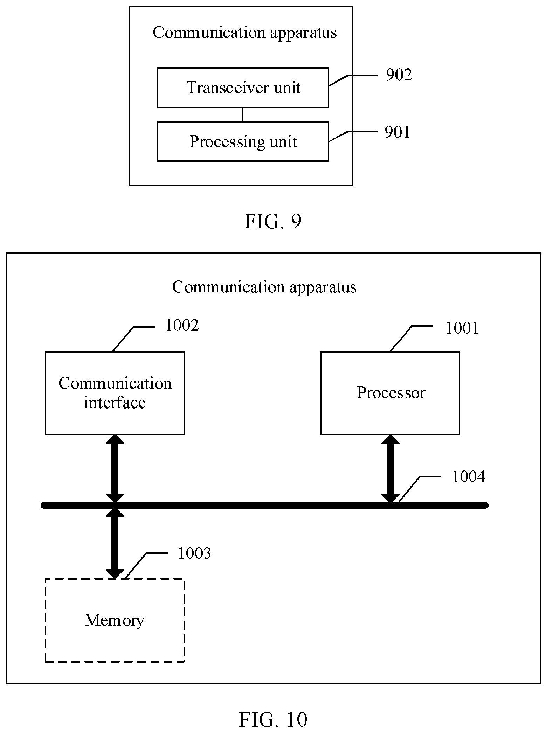

Based on a same invention concept as that of method embodiments, an embodiment of this application provides a communication apparatus. A structure of the apparatus may be shown in FIG. 9, and the apparatus includes a processing unit 901 and a transceiver unit 902.

In an implementation, a signal transmission apparatus may be specifically configured to implement the method shown in FIG. 3 and/or FIG. 4 in the foregoing embodiments. The apparatus may be a first terminal apparatus or a first device, or may be a chip, a chipset in the first terminal apparatus or the first device, or a part of a chip that is configured to perform a related method function. In a possible implementation, the first device includes a network device, for example, a base station.

When performing the method performed by the first terminal apparatus in the method embodiment shown in FIG. 3, the transceiver unit 902 may be configured to obtain first information. The first information includes information about a first resource, first demodulation information, second demodulation information, and second information. A first data stream and a second data stream are carried on the first resource. The first data stream includes data of the first terminal apparatus and data of a second terminal apparatus, and data of the second data stream is the data of the first terminal apparatus. The second information indicates that one of the first demodulation information and the second demodulation information is used to demodulate the first data stream, and/or the second information indicates that one of the first demodulation information and the second demodulation information is used to demodulate the second data stream. The processing unit 901 may be configured to demodulate, based on demodulation information that is in the first demodulation information and the second demodulation information and that is used to demodulate the first data stream, a signal received on the first resource, to obtain the first data stream. The processing unit 901 may further demodulate, based on the first data stream and demodulation information that is in the first demodulation information and the second demodulation information and that is used to demodulate the second data stream, the signal received on the first resource, to obtain the second data stream.

In a possible design, the second information may include a first indication field, where the first indication field is associated with the first demodulation information, and when a value of the first indication field is a first value, it indicates that the first demodulation information is used to demodulate the first data stream, or when a value of the first indication field is a second value, it indicates that the first demodulation information is used to demodulate the second data stream; and/or the second information may include a second indication field, where the second indication field is associated with the second demodulation information, and when a value of the second indication field is a third value, it indicates that the second demodulation information is used to demodulate the first data stream, or when a value of the second indication field is a fourth value, it indicates that the second demodulation information is used to demodulate the second data stream.

In a possible design, the first information may further include information about a feedback resource.

In a possible design, the transceiver unit 902 may further send, by using the feedback resource, feedback information of the signal received on the first resource. The feedback information includes a third indication field. When a value of the third indication field is a fifth value, it indicates that demodulation of the first data stream fails, or when a value of the third indication field is a sixth value, it indicates that demodulation of the first data stream succeeds and demodulation of the second data stream fails, or when a value of the third indication field is a seventh value, it indicates that demodulation of the first data stream succeeds and demodulation of the second data stream succeeds.

In a possible design, the first information is dedicated signaling of the first terminal apparatus.

In a possible design, a pilot of a signal corresponding to the first data stream is different from a pilot of a signal corresponding to the second data stream.

The communication apparatus may be further configured to implement the first device provided in this embodiment of this application. When performing the method shown in the method embodiment shown in FIG. 3, the processing unit 901 may be configured to determine the first information. The first information includes the information about the first resource, the first demodulation information, the second demodulation information, and the second information. The first data stream and the second data stream are carried on the first resource. The first data stream includes the data of the first terminal apparatus and the data of a second terminal apparatus, and the data of the second data stream is the data of the first terminal apparatus. The second information indicates that one of the first demodulation information and the second demodulation information is used to demodulate the first data stream, and/or the second information indicates that one of the first demodulation information and the second demodulation information is used to demodulate the second data stream. The transceiver unit 902 may be configured to send the first information to the first terminal apparatus, and send the first data stream and the second data stream through the first resource.

In a possible design, the second information may include the first indication field, where the first indication field is associated with the first demodulation information, and when the first indication field is the first value, it indicates that the first demodulation information is used to demodulate the first data stream, or when the first indication field is the second value, it indicates that the first demodulation information is used to demodulate the second data stream; and/or the second information may include the second indication field, where the second indication field is associated with the second demodulation information, and when the second indication field is the third value, it indicates that the second demodulation information is used to demodulate the first data stream, or when the second indication field is the fourth value, it indicates that the second demodulation information is used to demodulate the second data stream.

In a possible design, the first information may further include the information about the feedback resource.

In a possible design, the transceiver unit 902 may further receive, by using the feedback resource, the feedback information of the signal received by the first terminal apparatus on the first resource. The feedback information includes the third indication field. When the third indication field is the fifth value, it indicates that demodulation of the first data stream fails, or when the third indication field is the sixth value, it indicates that demodulation of the first data stream succeeds and demodulation of the second data stream fails, or when the third indication field is the seventh value, it indicates that demodulation of the first data stream succeeds and demodulation of the second data stream succeeds.

In a possible design, the first resource further carries a third data stream of the second terminal apparatus, and the transceiver unit 902 may further send third information to the second terminal apparatus. The third information includes the information about the first resource, third demodulation information, fourth demodulation information, and fourth information. The first data stream and the third data stream are carried on the first resource, and data of the third data stream is the data of the second terminal apparatus. The fourth information indicates that one of the third demodulation information and the fourth demodulation information is used to demodulate the first data stream, and/or the fourth information indicates that one of the third demodulation information and the fourth demodulation information is used to demodulate the third data stream. The transceiver unit 902 may be further configured to send the second data stream through the first resource.

In a possible design, the third information is dedicated signaling of the second terminal apparatus.

In a possible design, the first information is the dedicated signaling of the first terminal apparatus.

In a possible design, a pilot of a signal corresponding to the first data stream is different from a pilot of a signal corresponding to the second data stream.

When performing the method performed by the first terminal apparatus in the method embodiment shown in FIG. 4, the transceiver unit 902 may be configured to receive fifth demodulation information. The fifth demodulation information is used to demodulate the first data stream, and the first data stream includes the data of the first terminal apparatus and the data of the second terminal apparatus. The first terminal apparatus may further demodulate, based on the fifth demodulation information, the signal received on the first resource, to obtain the first data stream. The first resource is used to carry the first data stream and the second data stream, and the data of the second data stream is the data of the first terminal apparatus. The transceiver unit 902 may obtain sixth demodulation information. The processing unit 901 may further demodulate, based on the sixth demodulation information and the first data stream, the signal received on the first resource, to obtain the second data stream.

In a possible design, the first data stream may further include the sixth demodulation information. Alternatively, the first terminal apparatus may receive the sixth demodulation information from the first device.

In a possible design, the first data stream may further include indication information, and the indication information indicates that the first resource is used to carry the second data stream.

In a possible design, the fifth demodulation information may further include the information about the first resource; and/or the transceiver unit 902 may be further configured to receive the information about the first resource, and the information about the first resource indicates the first resource.

In a possible design, the fifth demodulation information may further include the information about the feedback resource.

In a possible design, the sixth demodulation information may further include the information about the feedback resource.

In a possible design, the transceiver unit 902 may be further configured to receive the information about the feedback resource.

In a possible design, the transceiver unit 902 may be further configured to send, by using the feedback resource, the feedback information of the signal received on the first resource. The feedback information includes the third indication field. When the third indication field is the fifth value, it indicates that demodulation of the first data stream fails, or when the third indication field is the sixth value, it indicates that demodulation of the first data stream succeeds and demodulation of the second data stream fails, or when the third indication field is the seventh value, it indicates that demodulation of the first data stream succeeds and demodulation of the second data stream succeeds.

In a possible design, the fifth demodulation information is carried in common signaling.

In a possible design, the sixth demodulation information is carried in the dedicated signaling of the first terminal apparatus.

In a possible design, a pilot of a signal corresponding to the first data stream is different from a pilot of a signal corresponding to the second data stream.

The communication apparatus may be further configured to implement the first device provided in this embodiment of this application. When performing the method shown in the method embodiment shown in FIG. 4, the processing unit 901 may be configured to determine the fifth demodulation information. The fifth demodulation information is used to demodulate the first data stream. The first data stream includes the data of the first terminal apparatus and the data of the second terminal apparatus. The transceiver unit 902 may be configured to send the fifth demodulation information. The transceiver unit 902 may further send the first data stream and the second data stream through the first resource. The data of the second data stream is the data of the first terminal apparatus. The first data stream includes the sixth demodulation information, or the transceiver unit 902 may further send the sixth demodulation information to the first terminal apparatus. The sixth demodulation information is used to demodulate the second data stream, and the data of the second data stream is the data of the first terminal apparatus. Optionally, the processing unit 901 may be further configured to determine the sixth demodulation information.

In a possible design, the first data stream further includes the indication information, and the indication information indicates that the first resource is used to carry the second data stream.

In a possible design, the fifth demodulation information further includes the information about the first resource; and/or the transceiver unit 902 may further send the information about the first resource, and the information about the first resource indicates the first resource.

In a possible design, the fifth demodulation information further includes the information about the feedback resource.

In a possible design, the sixth demodulation information further includes the information about the feedback resource.

In a possible design, the transceiver unit 902 may further send the information about the feedback resource.

In a possible design, the transceiver unit 902 may further receive, by using the feedback resource, the feedback information of the signal received by the first terminal apparatus on the first resource. The feedback information includes the third indication field. When the third indication field is the fifth value, it indicates that demodulation of the first data stream fails, or when the third indication field is the sixth value, it indicates that demodulation of the first data stream succeeds and demodulation of the second data stream fails, or when the third indication field is the seventh value, it indicates that demodulation of the first data stream succeeds and demodulation of the second data stream succeeds.

In a possible design, the first resource further carries the third data stream of the second terminal apparatus, and the transceiver unit 902 may further send the third data stream through the first resource. The first data stream further includes seventh demodulation information, or the first device further sends the seventh demodulation information, and the seventh demodulation information is carried in the dedicated signaling of the second terminal apparatus. The seventh demodulation information is used to demodulate the third data stream.

In a possible design, the fifth demodulation information is carried in the common signaling.

In a possible design, the sixth demodulation information is carried in the dedicated signaling of the first terminal apparatus.

In a possible design, a pilot of a signal corresponding to the first data stream is different from a pilot of a signal corresponding to the second data stream.

In a possible manner, a structure of the communication apparatus may alternatively be shown in FIG. 10. The apparatus may include a processor 1001 and a communication interface 1002, and may further include a memory 1003. The processing unit 901 may be the processor 1001. The transceiver unit 902 may be the communication interface 1002.

The processor 1001 may be a central processing unit (central processing unit, CPU), a digital processing unit, or the like. The communication interface 1002 may be a transceiver, an interface circuit such as a transceiver circuit, a transceiver chip, or the like. The apparatus further includes the memory 1003, configured to store a program executed by the processor 1001. The memory 1003 may be a nonvolatile memory such as a hard disk drive (hard disk drive, HDD) or a solid-state drive (solid-state drive, SSD), or may be a volatile memory (volatile memory), for example, a random-access memory (random-access memory, RAM). The memory 1003 is any other medium that can be used to carry or store expected program code that is in a form of an instruction or a data structure and that is accessible to a computer, but is not limited thereto.

The processor 1001 is configured to execute the program code stored in the memory 1003, to implement a function performed by the first terminal apparatus or the first device provided in the foregoing method embodiment, for example, specifically perform an action of the processing unit 901. Details are not described herein again in this application. The communication interface 1002 is specifically configured to perform an action of the transceiver unit 902. Details are not described in this application again.

A specific connection medium between the communication interface 1002, the processor 1001, and the memory 1003 is not limited in this embodiment of this application. In this embodiment of this application, the memory 1003, the processor 1001, and the communication interface 1002 are connected through a bus 1004 in FIG. 10. The bus is represented by using a thick line in FIG. 10. A connection manner between other components is merely an example for description, and is not limited thereto. The bus may be classified into an address bus, a data bus, a control bus, and the like. For ease of representation, only one thick line is used to represent the bus in FIG. 10, but this does not mean that there is only one bus or only one type of bus.

An embodiment of this application further provides a communication apparatus, including a processor and an interface. The processor may be configured to perform the method in the foregoing method embodiments. It should be understood that the communication apparatus may be a chip. For example, the communication apparatus may be a field programmable gate array (field programmable gate array, FPGA), an application-specific integrated chip (application-specific integrated circuit, ASIC), a system on chip (system on chip, SoC), a CPU, a network processor (network processor, NP), a digital signal processor (digital signal processor, DSP), a micro controller (micro controller unit, MCU), a programmable controller (programmable logic device, PLD), or another integrated chip.

For example, the interface may be an interface circuit. For example, the interface circuit may be a code/data read/write interface circuit. The interface circuit may be configured to receive code instructions (where the code instructions are stored in a memory and may be directly read from the memory, or may be read from the memory by using another component), and transmit the code instructions to the processor. The processor may be configured to run the code instructions to perform the method in the foregoing method embodiments.

For another example, the interface circuit may alternatively be a signal transmission interface circuit between a communication processor and a transceiver. For example, in a sending scenario, the processor is configured to perform XX to obtain Y data (where XX is a non-air interface operation, and includes but is not limited to operations such as determining, judging, processing, calculating, searching, and comparing). The interface circuit may be configured to send the Y data to a transmitter (where the transmitter is configured to perform a sending operation on an air interface). For another example, in a receiving scenario, the interface circuit may be configured to receive Z data from a receiver (where the receiver is configured to perform a receiving operation on an air interface), and send the Z data to the processor. The processor is configured to perform XX processing on the Z data (where XX is a non-air interface operation, and includes but is not limited to operations such as determining, judging, processing, calculating, searching, and comparing).

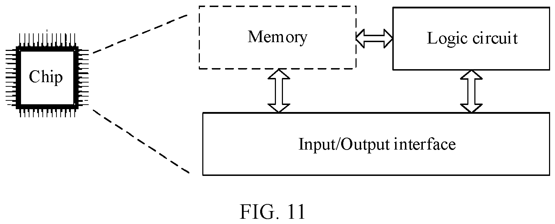

For example, FIG. 11 shows a possible chip structure. The chip includes a logic circuit and an input/output interface, and may further include a memory. The input/output interface may be configured to receive code instructions (where the code instructions are stored in the memory and may be directly read from the memory, or may be read from the memory by using another component), and transmit the code instructions to the logic circuit. The logic circuit may be configured to run the code instructions to perform the method performed by the first terminal apparatus or the first device in the foregoing method embodiments.

Alternatively, the input/output interface may be a signal transmission interface circuit between the logic circuit and the transceiver. For example, in a sending scenario, the logic circuit is configured to perform XX to obtain Y data (where XX is a non-air interface operation, and includes but is not limited to operations such as determining, judging, processing, calculating, searching, and comparing). The input/output interface may be configured to send the Y data to a transmitter (where the transmitter is configured to perform a sending operation on an air interface). For another example, in a receiving scenario, the input/output interface may be configured to receive Z data from a receiver (where the receiver is configured to perform a receiving operation on an air interface), and send the Z data to the logic circuit. The logic circuit is configured to perform XX processing on the Z data (where XX is a non-air interface operation, and includes but is not limited to operations such as determining, judging, processing, calculating, searching, and comparing).

An embodiment of the present invention further provides a computer-readable storage medium, configured to store computer software instructions that need to be executed for execution of the foregoing processor, and the computer-readable storage medium includes a program that needs to be executed for execution of the foregoing processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

In embodiments of this application, a plurality of technical features in a technical feature may be distinguished by using "first", "second", "third", "A", "B", "C", "D", or the like. There is no sequence or size order among the technical features described in the "first", "second", "third", "A", "B", "C", and "D".

## Claims

1. A communication method, comprising:
obtaining, by a first terminal apparatus, first information, wherein the first information comprises information about a first resource, first demodulation information, second demodulation information, and second information, a first data stream and a second data stream are carried on the first resource, the first data stream comprises data of the first terminal apparatus and data of a second terminal apparatus, and data of the second data stream is the data of the first terminal apparatus; and the second information indicates that one of the first demodulation information and the second demodulation information is used to demodulate the first data stream, and/or the second information indicates that one of the first demodulation information and the second demodulation information is used to demodulate the second data stream;
demodulating, by the first terminal apparatus based on demodulation information that is in the first demodulation information and the second demodulation information and that is used to demodulate the first data stream, a signal received on the first resource, to obtain the first data stream; and
demodulating, by the first terminal apparatus based on the first data stream and demodulation information that is in the first demodulation information and the second demodulation information and that is used to demodulate the second data stream, the signal received on the first resource, to obtain the second data stream.

2. The method according to claim 1, wherein
the second information comprises a first indication field, and the first indication field is associated with the first demodulation information; and when a value of the first indication field is a first value, it indicates that the first demodulation information is used to demodulate the first data stream, or when a value of the first indication field is a second value, it indicates that the first demodulation information is used to demodulate the second data stream; and/or
the second information comprises a second indication field, and the second indication field is associated with the second demodulation information; and when a value of the second indication field is a third value, it indicates that the second demodulation information is used to demodulate the first data stream, or when a value of the second indication field is a fourth value, it indicates that the second demodulation information is used to demodulate the second data stream.

3. The method according to claim 1 or 2, wherein the first information further comprises information about a feedback resource.

4. The method according to any one of claims 1 to 3, further comprising:
sending, by the first terminal apparatus by using the feedback resource, feedback information of the signal received on the first resource, wherein
the feedback information comprises a third indication field; and when a value of the third indication field is a fifth value, it indicates that demodulation of the first data stream fails, or when a value of the third indication field is a sixth value, it indicates that demodulation of the first data stream succeeds and demodulation of the second data stream fails, or when a value of the third indication field is a seventh value, it indicates that demodulation of the first data stream succeeds and demodulation of the second data stream succeeds.

5. The method according to any one of claims 1 to 4, wherein a pilot of a signal corresponding to the first data stream is different from a pilot of a signal corresponding to the second data stream.

6. A communication method, comprising:
sending, by a first device, first information to a first terminal apparatus, wherein the first information comprises information about a first resource, first demodulation information, second demodulation information, and second information, a first data stream and a second data stream are carried on the first resource, the first data stream comprises data of the first terminal apparatus and data of a second terminal apparatus, and data of the second data stream is the data of the first terminal apparatus; and the second information indicates that one of the first demodulation information and the second demodulation information is used to demodulate the first data stream, and/or the second information indicates that one of the first demodulation information and the second demodulation information is used to demodulate the second data stream; and
sending, by the first device, the first data stream and the second data stream through the first resource.

7. The method according to claim 6, wherein
the second information comprises a first indication field, and the first indication field is associated with the first demodulation information; and when a value of the first indication field is a first value, it indicates that the first demodulation information is used to demodulate the first data stream, or when a value of the first indication field is a second value, it indicates that the first demodulation information is used to demodulate the second data stream; and/or
the second information comprises a second indication field, and the second indication field is associated with the second demodulation information; and when a value of the second indication field is a third value, it indicates that the second demodulation information is used to demodulate the first data stream, or when a value of the second indication field is a fourth value, it indicates that the second demodulation information is used to demodulate the second data stream.

8. The method according to claim 6 or 7, wherein the first information further comprises information about a feedback resource.

9. The method according to any one of claims 6 to 8, further comprising:
receiving, by the first device by using the feedback resource, feedback information of a signal received by the first terminal apparatus on the first resource, wherein
the feedback information comprises a third indication field; and when a value of the third indication field is a fifth value, it indicates that demodulation of the first data stream fails, or when a value of the third indication field is a sixth value, it indicates that demodulation of the first data stream succeeds and demodulation of the second data stream fails, or when a value of the third indication field is a seventh value, it indicates that demodulation of the first data stream succeeds and demodulation of the second data stream succeeds.

10. The method according to any one of claims 6 to 9, wherein the first resource further carries a third data stream of the second terminal apparatus, and the method further comprises:
sending, by the first device, third information to the second terminal apparatus, wherein the third information comprises the information about the first resource, third demodulation information, fourth demodulation information, and fourth information, the first data stream and the third data stream are carried on the first resource, and data of the third data stream is the data of the second terminal apparatus; and the fourth information indicates that one of the third demodulation information and the fourth demodulation information is used to demodulate the first data stream, and/or the fourth information indicates that one of the third demodulation information and the fourth demodulation information is used to demodulate the third data stream; and
sending, by the first device, the second data stream through the first resource.

11. The method according to any one of claims 6 to 10, wherein the first information is dedicated signaling of the first terminal apparatus.

12. The method according to any one of claims 6 to 11, wherein a pilot of a signal corresponding to the first data stream is different from a pilot of a signal corresponding to the second data stream.

13. A first terminal apparatus, comprising a processing unit and a transceiver unit, wherein
the transceiver unit is configured to obtain first information, wherein the first information comprises information about a first resource, first demodulation information, second demodulation information, and second information, a first data stream and a second data stream are carried on the first resource, the first data stream comprises data of the first terminal apparatus and data of a second terminal apparatus, and data of the second data stream is the data of the first terminal apparatus; and the second information indicates that one of the first demodulation information and the second demodulation information is used to demodulate the first data stream, and/or the second information indicates that one of the first demodulation information and the second demodulation information is used to demodulate the second data stream;
the processing unit is used by the first terminal apparatus to demodulate, based on demodulation information that is in the first demodulation information and the second demodulation information and that is used to demodulate the first data stream, a signal received on the first resource, to obtain the first data stream; and
the processing unit is further used by the first terminal apparatus to demodulate, based on the first data stream and demodulation information that is in the first demodulation information and the second demodulation information and that is used to demodulate the second data stream, the signal received on the first resource, to obtain the second data stream.

14. The first terminal apparatus according to claim 13, wherein
the second information comprises a first indication field, and the first indication field is associated with the first demodulation information; and when a value of the first indication field is a first value, it indicates that the first demodulation information is used to demodulate the first data stream, or when a value of the first indication field is a second value, it indicates that the first demodulation information is used to demodulate the second data stream; and/or
the second information comprises a second indication field, and the second indication field is associated with the second demodulation information; and when a value of the second indication field is a third value, it indicates that the second demodulation information is used to demodulate the first data stream, or when a value of the second indication field is a fourth value, it indicates that the second demodulation information is used to demodulate the second data stream.

15. The first terminal apparatus according to claim 13 or 14, wherein the first information further comprises information about a feedback resource.

16. The first terminal apparatus according to any one of claims 13 to 15, wherein the transceiver unit is further configured to:
send, by using the feedback resource, feedback information of the signal received on the first resource, wherein
the feedback information comprises a third indication field; and when a value of the third indication field is a fifth value, it indicates that demodulation of the first data stream fails, or when a value of the third indication field is a sixth value, it indicates that demodulation of the first data stream succeeds and demodulation of the second data stream fails, or when a value of the third indication field is a seventh value, it indicates that demodulation of the first data stream succeeds and demodulation of the second data stream succeeds.

17. The first terminal apparatus according to any one of claims 13 to 16, wherein the first information is dedicated signaling of the first terminal apparatus.

18. The first terminal apparatus according to any one of claims 13 to 17, wherein a pilot of a signal corresponding to the first data stream is different from a pilot of a signal corresponding to the second data stream.

19. A communication apparatus, comprising a processing unit and a transceiver unit, wherein
the processing unit is configured to determine first information, wherein the first information comprises information about a first resource, first demodulation information, second demodulation information, and second information, a first data stream and a second data stream are carried on the first resource, the first data stream comprises data of a first terminal apparatus and data of a second terminal apparatus, and data of the second data stream is the data of the first terminal apparatus; and the second information indicates that one of the first demodulation information and the second demodulation information is used to demodulate the first data stream, and/or the second information indicates that one of the first demodulation information and the second demodulation information is used to demodulate the second data stream; and
the transceiver unit is configured to send the first information to the first terminal apparatus, and send the first data stream and the second data stream through the first resource.

20. The communication apparatus according to claim 19, wherein
the second information comprises a first indication field, and the first indication field is associated with the first demodulation information; and when a value of the first indication field is a first value, it indicates that the first demodulation information is used to demodulate the first data stream, or when a value of the first indication field is a second value, it indicates that the first demodulation information is used to demodulate the second data stream; and/or
the second information comprises a second indication field, and the second indication field is associated with the second demodulation information; and when a value of the second indication field is a third value, it indicates that the second demodulation information is used to demodulate the first data stream, or when a value of the second indication field is a fourth value, it indicates that the second demodulation information is used to demodulate the second data stream.

21. The communication apparatus according to claim 19 or 20, wherein the first information further comprises information about a feedback resource.

22. The communication apparatus according to any one of claims 19 to 21, wherein the transceiver unit is further configured to:
receive, by using the feedback resource, feedback information of a signal received by the first terminal apparatus on the first resource, wherein
the feedback information comprises a third indication field; and when a value of the third indication field is a fifth value, it indicates that demodulation of the first data stream fails, or when a value of the third indication field is a sixth value, it indicates that demodulation of the first data stream succeeds and demodulation of the second data stream fails, or when a value of the third indication field is a seventh value, it indicates that demodulation of the first data stream succeeds and demodulation of the second data stream succeeds.

23. The communication apparatus according to any one of claims 19 to 22, wherein the first resource further carries a third data stream of the second terminal apparatus, and the transceiver unit is further configured to:
send third information to the second terminal apparatus, wherein the third information comprises the information about the first resource, third demodulation information, fourth demodulation information, and fourth information, the first data stream and the third data stream are carried on the first resource, and data of the third data stream is the data of the second terminal apparatus; and the fourth information indicates that one of the third demodulation information and the fourth demodulation information is used to demodulate the first data stream, and/or the fourth information indicates that one of the third demodulation information and the fourth demodulation information is used to demodulate the third data stream; and
send the second data stream through the first resource.

24. The communication apparatus according to any one of claims 19 to 23, wherein the first information is dedicated signaling of the first terminal apparatus.

25. The communication apparatus according to any one of claims 19 to 24, wherein a pilot of a signal corresponding to the first data stream is different from a pilot of a signal corresponding to the second data stream.

26. A communication apparatus, comprising a processor and a memory, wherein the processor is coupled to the memory;
the memory stores a computer program; and
the processor is configured to execute the computer program stored in the memory, to enable the apparatus to perform the method according to any one of claims 1 to 12.

27. A computer-readable storage medium, comprising programs or instructions, wherein when the programs or the instructions are run on a computer, the method according to any one of claims 1 to 12 is performed.

28. A chip, wherein the chip is coupled to a memory, and is configured to read and execute program instructions stored in the memory, to perform the method according to any one of claims 1 to 12.

29. A communication system, comprising the first terminal apparatus according to any one of claims 13 to 18 and the communication apparatus according to any one of claims 19 to 25.

30. A computer program product comprising instructions, wherein when the computer program product runs on a computer, the method according to any one of claims 1 to 12 is performed.
